# EUROPÄISCHE PATENTSCHRIFT

(11) **EP 0 714 056 B1**
(45) Veröffentlichungstag und Bekanntmachung des Hinweises auf die Patenterteilung: **20.05.1998**
(21) Anmeldenummer: 95115529.0
(22) Anmeldetag: 02.10.1995
(51) Int. Cl.: G05G 1/14

(54) **Einteiliges Pedal**
One-piece pedal
Pédale en une seule pièce

(30) Priorität: 26.11.1994 DE 4442122
(43) Veröffentlichungstag der Anmeldung: 29.05.1996
(73) Patentinhaber: Dr.Ing.h.c. F. Porsche Aktiengesellschaft, 70435 Stuttgart (DE)
(72) Erfinder: Baumann, Hans-Uwe, D-70437 Stuttgart (DE)

(56) Entgegenhaltungen:
- DE-A- 3 909 941
- KUNSTSTOFFE, Bd. 85, Nr. 3, 1.März 1995 Seiten 312-314, 317/318, XP 000488309 BERETTA S ET AL 'BREMSPEDAL AUS GLASFASERVERSTARKTEM POLYAMID'

## Beschreibung

Die Erfindung bezieht sich auf ein einteiliges Pedal nach dem Oberbegriff des Anspruchs 1.

Aus der DE 39 09 941 C2 ist ein Pedal für ein Kraftfahrzeug bekannt, das aus einem Hohlprofil besteht und an dessen Pedalkörper eine Trittplatte angeformt ist, die das freie Ende des als U-Profil ausgebildeten Pedalabschnitts verstärkt. Eine weitere Verstärkung in Form einer Rippe ist in diesem Bereich ebenfalls vorgesehen.

Aufgabe der Erfindung ist es, ein verbessertes Pedal aus Kunststoff zu schaffen, das im unteren Bereich des Pedals eine solche Festigkeit gewährleistet, das höchsten Belastungsfällen genügt und trotzdem eine Herstellung im Spritzgußverfahren mit einfach entfernbaren Formkernen ermöglicht.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die spezielle Ausbildung des die Trittplatte tragenden Abschnitts des Pedalkörpers mit mehreren inneren Verstärkungsrippen in Längs- und Querebenen eine festigkeitsmäßig optimale Gestaltung bei einfacher Fertigung erzielt wird.

So tragen insbesondere die beiden Verstärkungsrippen in der Querebene in inniger Verbindung mit den weiteren Verstärkungsrippen in der Längsebene zu einem stabilen Knoten bei, der auch, beispielsweise bei einem Bremspedal, plötzliche hohe Belastungen aufnimmt, z.B. einem Fahrzeug-Crash, wobei die Betätigung des Pedals nicht nur zentral, sondern auch von schräg erfolgen kann und trotzdem eine Verformung oder anderweitige Beschädigung unterbunden wird.

Damit eine einfache Kernentfernung nach einem Spritzguß erfolgen kann, sind die von den Verstärkungsrippen gebildeten Hohlräume durch die äußeren Wände, wie die Rückwand und die Vorderwand keilförmig bzw. mit Entformungsschrägen ausgebildet, und zwar in beiden Ebenen wie in der Längsebene und der Querebene des Pedals.

Die Verstärkungsrippen in der Querebene können sowohl in eine Zwischenwand der Hohlräume, welche die beiden Abschnitte des Pedalkörpers voneinander trennt als auch nur in die Vorderwand einlaufen.

Die weiteren, in der Längsebene verlaufenden Verstärkungsrippen sind bei einer Pedalausführung, beispielsweise eines Bremspedals, jeweils zwischen der Rückwand und einer ersten querverlaufenden Verstärkungsrippe und zwischen einer zweiten querverlaufenden Verstärkungsrippe und der Vorderwand angeordnet. Die in der Längsebene verlaufenden Verstärkungsrippen erstrecken sich zur Erzielung einer optimalen Steifigkeit des Pedals bis in den zweiten Abschnitt des Pedalkörpers hinein. Hierzu verläuft diese Verstärkungsrippe von der Innenseite bis zur Außenseite der querverlaufenden Verstärkungsrippe in den zweiten Abschnitt des Pedalkörpers hinein. Diese Rippe ist im Formverlauf so ausgeführt, daß sie sich an den bogenförmigen Übergang vom ersten zum zweiten Pedalabschnitt im wesentlichen anlehnt. Diese Verstärkungsrippe verläuft vorzugsweise in der Längsmittenebene der Pedalkörper.

Nach einer weiteren Ausführung des Pedals kann die an sich glattflächig ausgeführte Außenobenfläche, wie beispielsweise im unteren Abschnitt des Pedalkörpers mit einer randseitigen Rippe versehen sein, die stirnseitig des Schenkels des U-förmigen Profil vorgesehen ist. Gleichzeitig ist der obere Abschnitt des Pedalkörpers an seiner Rückseite mit einer entsprechend ausgeführten randseitigen Rippe versehen. Diese Rippen dienen im wesentlichen zur Randversteifung und im unteren Abschnitt gleichzeitig als vergrößerte Auflagefläche des Pedals am Boden.

Ausführungsbeispiele der Erfindung sind in der Zeichnung dargestellt und werden im folgenden näher beschrieben.
Es zeigen
- Fig. 1.: einen Längsschnitt durch ein Pedal, wie ein Kupplungs- oder ein Bremspedal,
- Fig. 2: einen Querschnitt durch das Pedal nach der Linie II-II der Fig. 1,
- Fig. 3: einen Schnitt nach der Linie III-III der Fig. 1,
- Fig. 4: eine weitere Anordnung der Verstärkungsrippen in einer Querebene
- Fig. 5: einen Schnitt nach der Linie IV-IV der Fig. 1,
- Fig. 6: einen Schnitt durch den Arm des Pedals nach der Linie VI-VI der Fig. 4
- Fig. 7: eine schaubildliche Darstellung des Armes mit umlaufenden Rippen und einer angeformten Lageraufnahme.

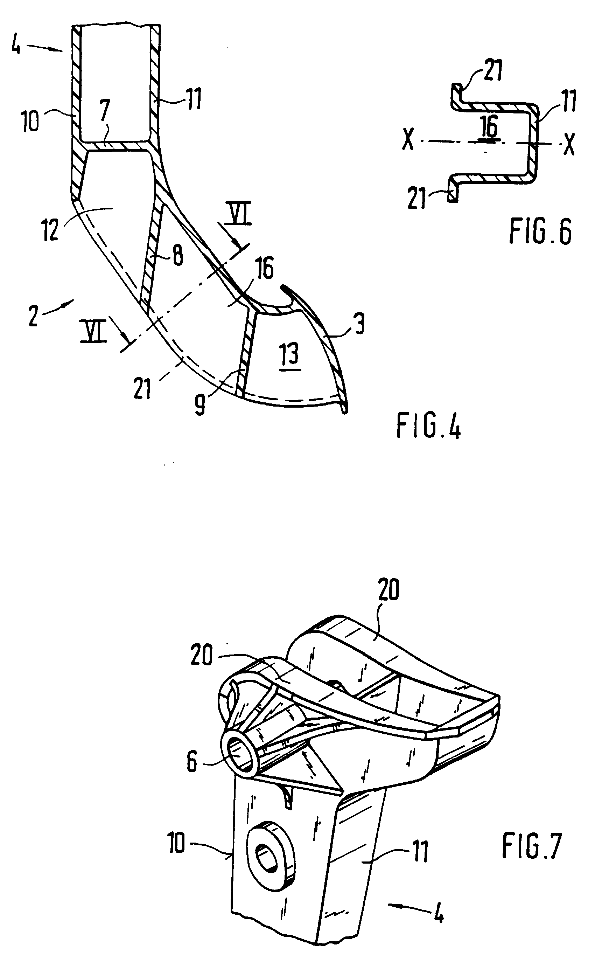

Ein Pedal 1 beispielsweise für eine Bremse oder eine Kupplung eines Fahrzeugs besteht im wesentlichen aus einem Pedalkörper hohlen Querschnitts, insbesondere rechteckförmigen Querschnitts und weist endseitig eines unteren Abschnitts 2 eine angeformte Trittplatte 3 und endseitig eines oberen Abschnitts 4 einen Arm 5. Der Arm 5 befindet sich unmittelbar unter einem karosseriefesten Anschlag 25 und verhindert bei einem Crash das tiefe Eindringen des Pedals in den Fußraum. Der die Trittplatte 3 tragende untere Abschnitt des Pedalkörpers ist im Querschnitt als offenes U-Profil ausgeführt, wobei durch ein entsprechendes U-Profil auch der Arm 5 des Pedalkörpers im Abschnitt 4 gebildet wird, wie die Fig. 5 und 6 näher zeigen.

Die beiden Abschnitte 2 und 4 des Pedalkörpers können durch eine Zwischenwand 7 getrennt sein. Im Raum des Abschnitts 2 sind zumindestens zwei in Querebenen Y-Y angeordnete Verstärkungsrippen 8 und 9 vorgesehen, die sich bis etwa zur Außenkontur K des Pedalkörpers erstrecken. Diese beiden Rippen 8 und 9 verlaufen parallel zueinander, wobei die Rückwand 10 zur Rippe 8 unter einem spitzen Winkel von ca. 1° und die Vorderwand 11 ebenfalls zur Rippe 9 in diesem Bereich gebildet durch die Trittplatte 3, etwa unter einem gleichen Winkel angeordnet ist, damit ein Kern einfach entfernbar ist. Durch diesen Verlauf der gegenüberstehenden Rippen und Wände 8, 9 und 10,11 wird jeweils ein keilförmiger hohler Raum 12, 13 gebildet, zwischen dem ein rechteckförmiger Hohlraum 16 vorgesehen ist.

Nach einer weiteren Ausführung gem. Fig. 4 laufen die beiden Verstärkungsrippen 8, 9 unter einem Winkel in die Vorderwand 11 des unteren Abschnitts 2 des Pedalkörpers ein. Die Bedingungen der Parallelität der beiden Rippen 8 und 9 zueinander sowie die Bildung von keilförmigen Hohlräumen 12 und 13 ist auch bei dieser Ausführung erfüllt. Bei dieser Ausführung kann die Zwischenwand 7 entfallen.

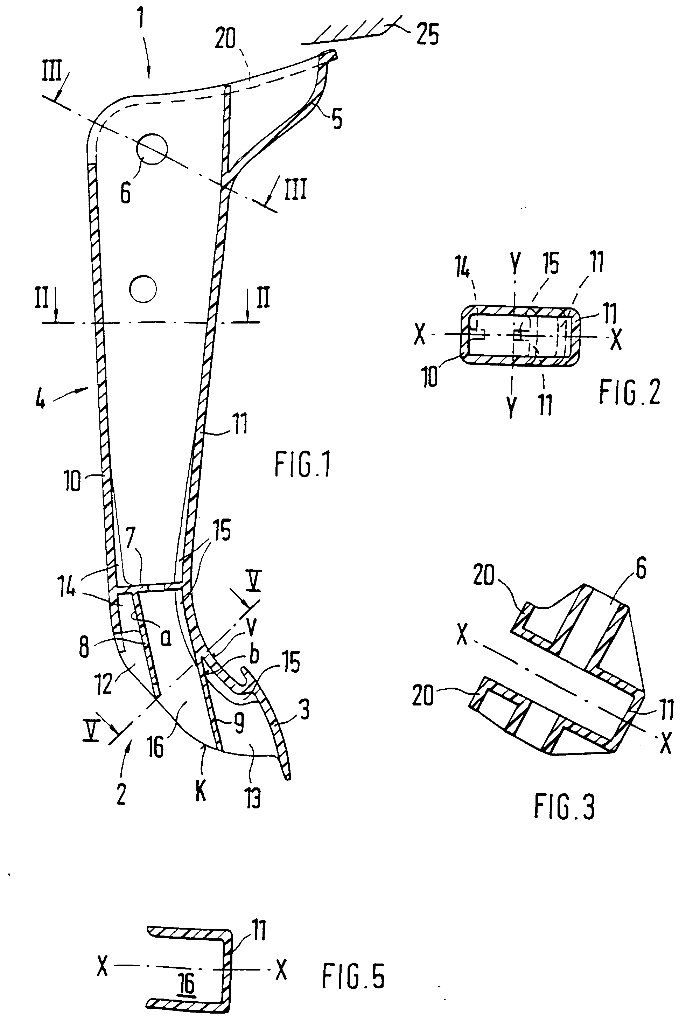

Nach einer weiteren Ausführung gem. Fig. 1 läuft die Rückwand 10 benachbart der Rippe 8 in die Zwischenwand 7 ein, wobei die Rippe 9 in die Vorderwand 11 einläuft und mit dieser in der Zwischenwand 7 endet.

In der Längsebene X-X können ergänzend zu den Verstärkungsrippen 8, 9 in der Querebene Y-Y weitere Verstärkungsrippen 14, 15 vorgesehen sein, wie die Ausführungen Fig. 1 und Fig. 2 näher zeigen. Diese Rippen 14, 15 sind jeweils über einen Teilbereich a und b mit den Verstärkungsrippen 8 und 9 der Querebene Y-Y verbunden und erstrecken sich über die Zwischenwand 7 in den Abschnitt 4 des Pedalkörpers, wo sie auslaufen können. Auch auf der Innenfläche der Rippe 9 im Hohlraum 16 verläuft diese Rippe 15. Der genannte Verlauf der Rippe 15 innenseitig der Vorderwand 11 entspricht in etwa der bogenförmigen Kontur V zwischen dem Abschnitt 2 und 4 des Pedalkörpers.

Das Pedal 1 kann entweder in Verlängerung der Rückwand 10 am Arm 5 außenseitig eine Rippe 20 aufweisen, wie Fig. 3 zeigt oder aber diese Rippen sind im unteren Abschnitt 2 als Rippen 21 vorgesehen. Am Pedal können sowohl am Arm 5 und im Abschnitt 2 des Pedalkörpers Rippen 20 und 21 angeformt sein.

Das Pedal 1 weist in einer Frontansicht gesehen Abschnitte 2, 4 des Pedalkörpers auf, die so gestaltet sind, daß ein Formkern aus diesen Abschnitten leicht zu entfernen ist. Hierzu weisen diese Abschnitte zur Zwischenwand 7 keilförmig zulaufende Außenwände auf.

An den Außenseiten des Pedalkörpers sind Lagerbuchsen angeformt, die mittels Verstärkungsrippen eine steife Verbindung zum Pedalkörper herstellen.

## Patentansprüche

1. Einteiliges Pedal für ein Kraftfahrzeug aus Kunststoff mit einem aus einem Hohlprofil bestehenden Pedalkörper mit angeformter Trittplatte sowie Lagerbohrungen und Aufnahmen, der außen- sowie innenseitig weitestgehend glattflächig ausgeführt ist und die Trittplatte eine vordere Abschlußwand für einen im Querschnitt U-förmiges offenes Profil eines unteren Abschnitts des Pedalkörpers bildet, das innenliegende Verstärkungsrippen aufweist, **dadurch gekennzeichnet,** daß der Pedalkörper mindestens zwei getrennte Abschnitte (2 und 4) umfaßt und der eine die Trittplatte (3) tragende Abschnitt (2) mindestens in einer Querebene (Y-Y) verlaufende erste und zweite Verstärkungsrippen (8, 9) aufweist, wobei die eine zur Trittplatte (3) unmittelbar benachbarete Verstärkungsrippe (9) zu der weiteren Verstärkungsrippe (8) etwa parallel angeordnet ist und die äußeren Wände (Rückwand 10) und Vorderwand (11) bzw. Trittplatte (3) unter einem spitzen Winkel zu den Rippen (8,9) gemäß der Kernzugrichtung verlaufen und einen keilförmigen Hohlraum (12, 13) ergeben, der zwischen sich einen rechteckförmigen Hohlraum (16) aufweist.

2. Pedal nach Anspruch 1, **dadurch gekennzeichnet,** daß die beiden Abschnitte (2 und 4) von einer Zwischenwand (7) unterteilt sind.

3. Pedal nach Anspruch 1, **dadurch gekennzeichnet,** daß die beiden Verstärkungsrippen (8, 9) unter einem Winkel in die Vorderwand (11) des Pedalkörpers einlaufen und der zwischen den Verstärkungsrippen (8, 9) liegende Hohlraum (16) als Boden die Vorderwand (11) aufweist.

4. Pedal nach Anspruch 3, **dadurch gekennzeichnet,** daß die Zwischenwand (7) des Pedalkörpers von einer Rückwand (10) des Pedalkörpers bis zu einer ersten Verstärkungsrippe (8) verläuft.

5. Pedal nach den Ansprüchen 1 oder 2, **dadurch gekennzeichnet,** daß die Zwischenwand (7) des Pedalkörpers sich von der Rückwand (10) bis zur zweiten Verstärkungsrippe (9) erstreckt und die erste Verstärkungsrippe (8) bis zur Rückwand (10) den keilförmigen Hohlraum (12) einschließt und die zwischen den Verstärkungsrippen (8. 9) liegende Hohlraum (16) als Boden die Zwischenwand (7) aufweist.

6. Pedal nach Anspruch 1 oder einem der vorhergehenden Ansprüche, **dadurch gekennzeichnet,** daß in der Längsebene (X-X) weitere Verstärkungsrippen (14, 15) des Pedalkörpers zwischen der Rückwand (10) und der ersten Verstärkungsrippe (8) sowie zwischen der Trittplatte (3) und der zweiten Rippe (9) angeordnet sind.

7. Pedal nach Anspruch 1 und einem der vorhergehenden Ansprüche, **dadurch gekennzeichnet,** daß die Verstärkungsrippen (14, 15) der Querebene (Y-Y) über einen Teilbereich (a und b) mit den Verstärkungsrippen (8, 9) in Längsebene (X-X) verbunden sind und diese Rippen (14, 15) sich über die Rippenfläche des in den zweiten Abschnitt (4) des Pedalkörpers hinein erstrecken und auslaufen.

8. Pedal nach Anspruch 1 oder einem der vorhergehenden Ansprüche, **dadurch gekennzeichnet,** daß die in der Längsebene (X-X) angeordneten Verstärkungsrippen (14, 15) an der Innenseite der Vorderwand (11) einem Formverlauf entsprechend der bogenförmigen Kontur (V) des Pedalkörpers zwischen den beiden Abschnitten (2 und 4) aufweist.

9. Pedal nach Anspruch 1 oder einem vorhergehenden Ansprüche, **dadurch gekennzeichnet,** daß die an sich glattflächig ausgebildeten Außenflächen des Pedalkörpers in Verlängerung der Außenflächen der Rückwand (10) randseitige Rippen (21) aufweisen, die im Bereich des die Trittplatte (3) tragenden Abschnitts (2) und/oder im Bereich des Armes (5) des weiteren Abschnitts (4) als Rippen (20) vorgesehen sind.

10. Pedal nach Anspruch 1 oder einem der vorgehenden Ansprüche, **dadurch gekennzeichnet,** daß die Rippen (20) nur im Bereich des Armes (5) vorgesehen sind.

11. Einteiliges Pedal für ein Kraftfahrzeug aus Kunststoff mit einem aus einem Hohlprofil bestehenden Pedalkörper mit angeformter Trittplatte sowie Lagerbohrungen und Aufnahmen, der außen- sowie innenseitig weitestgehend glattflächig ausgeführt ist und die Trittplatte eine vordere Abschlußwand ein im Querschnitt U-förmig offenes Profil eines unteren Abschnittes des Pedalkörpers bildet, das innenliegende Verstärkungsrippen aufweist, **dadurch gekennzeichnet,** daß der die Trittplatte (3) tragende Abschnitt (2) des Pedalkörpers mindestens zwei in der Querebene (Y-Y) verlaufende Verstärkungsrippen (8, 9) aufweist und diese in der Querebene (Y-Y) über einen Teilbereich (a, b) mit den Verstärkungsrippen (14, 15) in der Längsebene (X-X) verbunden sind und diese Rippen (14, 15) sich über die Rippenfläche bis in den zweiten Abschnitt (4) des Pedalkörpers hinein erstrecken und hier auslaufen.

## Claims

1. A one-piece pedal of plastics material for a motor vehicle, having a pedal body comprising a hollow section and having a foot plate integrally moulded thereon and having bearing bores and receiving means, the pedal body being formed with a substantially smooth surface on the outside and the inside, and the foot plate forming a front end wall for an open section - of U-shaped cross-section - of a lower portion of the pedal body which is provided with reinforcing ribs on the inside, **characterized in that** the pedal body comprises at least two separate portions (2 and 4), and one portion (2) supporting the foot plate (3) has first and second reinforcing ribs (8, 9) extending at least in a transverse plane (Y-Y), wherein one reinforcing rib (9) immediately adjacent to the foot plate (3) is arranged substantially parallel to the other reinforcing rib (8), and the outer walls (rear wall 10) and the front wall (11) and the foot plate (3) extend at an acute angle to the ribs (8, 9) in accordance with the core direction of pull and produce a [respective] wedge-shaped cavity (12, 13) embracing a rectangular cavity (16) therebetween.

2. A pedal according to Claim 1, **characterized in that** the two portions (2 and 4) are subdivided by a partition wall (7).

3. A pedal according to Claim 1, **characterized in that** the two reinforcing ribs (8, 9) run into the front wall (11) of the pedal body at an angle, and the cavity (16) situated between the reinforcing ribs (8, 9) has the front wall (11) as its base.

4. A pedal according to Claim 3, **characterized in that** the partition wall (7) of the pedal body extends from a rear wall (10) of the pedal body as far as a first reinforcing rib (8).

5. A pedal according to Claim 1 or 2, **characterized in that** the partition wall (7) of the pedal body extends from the rear wall (10) as far as the second reinforcing rib (9), and the first reinforcing rib (8) forms the wedge-shaped cavity (12) as far as the rear wall (10), and the cavity (16) situated between the reinforcing ribs (8, 9) has the partition wall (7) as its base.

6. A pedal according to Claim 1 or one of the preceding Claims, **characterized in that** in the longitudinal plane (**X-X**) further reinforcing ribs (14, 15) of the pedal body are provided between the rear wall (10) and the first reinforcing rib (8) and between the foot plate (3) and the second rib (9) [respectively].

7. A pedal according to Claim 1 and one of the preceding Claims, **characterized in that** the reinforcing ribs (14, 15) of the transverse plane (**Y-Y**) are connected to the reinforcing ribs (8, 9) in the longitudinal plane (**X-X**) by way of a partial area (a and b), and the said ribs (14, 15) extend by way of the rib surface of the ... into the second portion (4) of the pedal body and terminate therein.

8. A pedal according to Claim 1 or one of the preceding Claims, **characterized in that** the reinforcing ribs (14, 15) arranged in the longitudinal plane (**X-X**) on the inside of the front wall (11) have a shape corresponding to the curved outline (**V**) of the pedal body between the two portions (2 and 4).

9. A pedal according to Claim 1 or one of the preceding Claims, **characterized in that** the outer faces of the pedal body - which are formed with a smooth face *per se* - have edge ribs (21) in a continuation of the outer faces of the rear wall (10), the said edge ribs (21) being provided as ribs (20) in the region of the portion (2) supporting the foot plate (3) and/or in the region of the arm (5) of the other portion (4).

10. A pedal according to Claim 1 or one of the preceding Claims, **characterized in that** the ribs (20) are provided only in the region of the arm (5).

11. A one-piece pedal of plastics material for a motor vehicle, having a pedal body comprising a hollow section and having a foot plate integrally moulded thereon and having bearing bores and receiving means, the pedal body being formed with a substantially smooth surface on the outside and the inside, and the foot plate forming a front end wall [for] an open section - of U-shaped cross-section - of a lower portion of the pedal body which is provided with reinforcing ribs on the inside, **characterized in that** the portion (2) of the pedal body supporting the foot plate (3) comprises at least two reinforcing ribs (8, 9) extending in the transverse plane (**Y-Y**), and the said reinforcing ribs (8, 9) are connected in the transverse plane (**Y-Y**) by way of a partial area (**a, b**) to the reinforcing ribs (14, 15) in the longitudinal plane (**X-X**), and the said ribs (14, 15) extend over the rib face into the second portion (4) of the pedal body and terminate therein.

## Revendications

1. Pédale en une seule partie pour un véhicule automobile, en matière plastique, avec un corps de pédale, fait d'un profilé creux, avec plaque de pied venue de moulage ainsi que des perçages de palier et des logements, qui est réalisée avec une surface pratiquement lisse sur le côté extérieur comme sur le côté intérieur et la plaque de pied forme une paroi de fermeture avant pour un profilé ouvert, de section transversale en U, d'une partie inférieure du corps de pédale, qui présente des nervures de renfort intérieures, caractérisée en ce que le corps de pédale comprend au moins deux parties (2 et 4) séparées et une partie (2), portant la plaque de pied (3), présente au moins des premières et des deuxièmes nervures de renfort, (8, 9), s'étendant dans un plan transversal (Y-Y), une nervure de renfort (9), directement voisine de la plaque de pied (3), étant disposée à peu près parallèlement à l'autre nervure de renfort (8) et les parois extérieures (paroi arrière 10) et paroi avant (11) ou la plaque de pied (3) forment un angle aigu par rapport aux nervures (8, 9) selon le sens de traction du noyau et donnent une cavité (12, 13) en forme de coin, qui présentent entre elles une cavité (16) rectangulaire.

2. Pédale selon la revendication 1, caractérisée en ce que les deux parties (2 et 4) sont partagées par une cloison (7).

3. Pédale selon la revendication 1, caractérisée en ce que les deux nervures de renfort (8, 9) pénètrent sous un angle dans la paroi avant (11) du corps de pédale et la cavité (16), située entre les nervures de renfort (8, 9), présente comme fond la paroi avant (11).

4. Pédale selon la revendication 3, caractérisée en ce que la cloison (7) du corps de pédale s'étend depuis une paroi arrière (10) du corps de pédale jusqu'à une première nervure de renfort (8).

5. Pédale selon les revendications 1 ou 2, caractérisée en ce que la cloison (7) du corps de pédale s'étend depuis la paroi arrière (10) jusqu'à la deuxième nervure de renfort (9) et la première nervure de renfort (8) jusqu'à la paroi arrière (10) enferme la cavité (12) en forme de coin et la cavité (16), située entre les nervures de renfort (8, 9), présente en tant que fond la cloison (7).

6. Pédale selon la revendication 1 ou l'une des revendications précédentes, caractérisée en ce que dans le plan longitudinal (X-X) sont disposées d'autres nervures de renfort (14, 15) du corps de pédale, entre la paroi arrière (10) et la première nervure de renfort (8) ainsi qu'entre la plaque de pied (3) et la deuxième nervure (9).

7. Pédale selon la revendication 1 et l'une des revendications précédentes, caractérisée en ce que les nervures de renfort (14, 15) du plan transversal (Y-Y) sont reliées, par une zone partielle (a et b), avec les nervures de renfort (8, 9), dans le plan longitudinal (X-X) et ces nervures (14, 15) s'étendent et se terminent par la surface des nervures, dans la deuxième partie (4) du corps de pédale.

8. Pédale selon la revendication 1 ou l'une des revendications précédentes, caractérisée en ce que les nervures de renfort (14, 15), disposées dans le plan longitudinal (X-X), présentent, sur le côté intérieur de la paroi avant (11), une forme correspondant au contour (V) en arc du corps de pédale, entre les deux parties (2 et 4).

9. Pédale selon la revendication 1 ou l'une des revendications précédentes, caractérisée en ce que les faces extérieures du corps de pédale, conformées avec une surface lisse, présentent dans le prolongement des faces extérieures de la paroi arrière (10), des nervures (21) côté bordure, qui sont prévues en tant que nervures (20) dans la zone de la partie (2) portant la plaque de pied (3) et/ou dans la zone du bras (5) de l'autre partie (4).

10. Pédale selon la revendication 1 ou l'une des revendications précédentes, caractérisée en ce que les nervures (20) ne sont prévues que dans la zone du bras (5).

11. Pédale en une seule partie pour un véhicule automobile, en matière plastique, comportant un corps de pédale fait d'un profilé creux, avec plaque de pied venue de moulage ainsi que des perçages de palier et des logements, qui est réalisée avec une surface pratiquement lisse sur le côté extérieur comme sur le côté intérieur et la plaque de pied forme une paroi de fermeture avant pour un profilé ouvert, de section transversale en U, d'une partie inférieure du corps de pédale, qui présente des nervures de renfort intérieures, caractérisée en ce que la partie (2) portant la plaque de pied (3) du corps de pédale présente au moins deux nervures de renfort (8,9) s'étendant dans le plan transversal (Y-Y), que celles-ci sont reliées, dans le plan transversal (Y-Y), par une zone partielle (a,b) aux nervures de renfort (14,15) dans le plan longitudinal (X-X) et que ces nervures (14,15) s'étendent et se terminent par la surface des nervures dans la deuxième partie (4) du corps de pédale.
